# EUROPÄISCHE PATENTSCHRIFT

(11) **EP 0 704 573 B1**
(45) Veröffentlichungstag und Bekanntmachung des Hinweises auf die Patenterteilung: **05.12.2001**
(21) Anmeldenummer: 95114988.9
(22) Anmeldetag: 23.09.1995
(51) Int. Cl.: E01C 3/06, E01C 5/00, E02B 11/00, E02D 31/00

(54) **Mit Schadstoffen belastete und mit wasserdurchlässigen Pflastersteinen gepflasterte Bodenfläche**
Polluted and paved with permeable paving elements groundsurface
Surface de sol polluée et pavée avec des éléments de pavage perméables

(30) Priorität: 24.09.1994 DE 9415479 U
(43) Veröffentlichungstag der Anmeldung: 03.04.1996
(73) Patentinhaber: Kruss, Heinrich, 47669 Wachtendonk (DE)
(72) Erfinder: Kruss, Heinrich, 47669 Wachtendonk (DE)
(74) Vertreter: Bardehle, Heinz, Dipl.-Ing.

(56) Entgegenhaltungen:
- CA-A- 1 302 145
- DE-A- 2 939 007
- DE-U- 8 804 832
- DE-U- 9 306 131
- DE-U- 9 316 175
- FR-A- 2 282 020
- DATABASE WPI Section PQ, Week 8125 Derwent Publications Ltd., London, GB; Class P36, AN 81-F7437D & NL-A-7 908 186 (HEIDEMAATS.) , 1.Juni 1981

## Beschreibung

Die Erfindung betrifft eine mit Schadstoffen belastete und mit wasserdurchlässigen Pflastersteinen gepflasterte Bodenfläche, wobei auf dem Erdreich ein Pflasterbett aus Sand, Pflastermix und dergleichen feinkörnigem Material in im wesentlichen gleicher Stärke aufgebracht ist, auf dem wasserdurchlässige Pflastersteine unter Bildung von Fugen zwischen benachbarten Pflastersteinen in einem bestimmten Muster angeordnet sind, und wobei das Erdreich nach wenigstens einer Seite hin Gefälle aufweist und auf dem Erdreich eine druckfeste und säurebeständige Folie angeordnet ist sowie am unteren Ende der Folie quer zur Gefällerichtung ein Abflußrohr vorgesehen ist, das in einen im Erdreich angeordneten Sammelbehälter mündet.

Durch die bisher verwendeten Betonböden für Siloanlagen, wie sie in der Landwirtschaft und Industrie benutzt werden, dringt die aus der Silage herrührende Flüssigkeit in den Boden und belastet das Grundwasser.

Wenn aus diesem Grunde Siloanlagen Betonböden haben, so können diese durch Risse undicht werden. Außerdem ist die Wiederherstellung des ursprünglichen Zustandes an diesen Stellen bzw. die Entfernung der Betonböden außerordentlich aufwendig, so daß die Betonböden oftmals nicht entfernt werden und an diesen Stellen lange Zeit störend wirken.

Ähnliches gilt für die Flüssigdüngungsentsorgung auf Pflanzflächen in Gärtnereien, wobei das Pflanzgut - insbesondere Eriken - in bestimmten Zeitabständen mit Dünger, insbesondere Flüssigdünger gedüngt werden. Dabei gelangt Dünger bzw. Flüssigdünger in den Boden und belastet dort das Grundwasser.

Aus der DE-U-9316175 ist eine Anordnung zum Abdichten und Entwässern von chemisch und/oder mechanisch beanspruchten flüssigkeitsdurchlässigen Flächen wie Pflasterdecken und dgl., insbesondere von Betankungsflächen im Tankstellenbereich bekannt. Diese bekannte Anordnung ist durch eine Dränagematte gekennzeichnet, die unterhalb einer Tragschicht mit einer entsprechenden Körnung und oberhalb einer Spezialdichtungsbahn aus HD-PE mit Gefälle zu wenigstens einem Ablaufkörper angeordnet ist. Hierbei kann die Dränagematte unmittelbar auf der Spezialdichtungsbahn aufliegen.

Der Erfindung liegt die Aufgabe zugrunde, eine mit Schadstoffen belastete und mit wasserdurchlässigen Pflastersteinen gepflasterte Bodenfläche der einleitend genannten Art dahingehend zu verbessern, daß durch die Pflasterung bzw. deren Fugen in das Pflasterbett gelangende Schadstoffe in Form von Flüssigdünger, Siloflüssigkeiten, Chemikalien der Industrie und dergleichen nicht den Boden kontaminieren und nicht in das Grundwasser gelangen, wobei sichergestellt ist, daß die schädlichen Flüssigkeiten schnell von den Pflastersteinen durch die darunterliegenden Schichten bis auf die Folie gelangt und auf der Folie in Richtung des Gefälles durch das Dränagerohr in den Sammelbehälter fließt.

Diese Aufgabe wird erfindungsgemäß dadurch gelöst, daß am unteren Ende der Folie quer zur Gefällerichtung ein als Dränagerohr ausgebildetes Abflußrohr vorgesehen ist und zwischen dem auf dem Erdreich (2) angeordneten feinen Sand (9) und dem unmittelbar unter den Pflastersteinen (13) vorgesehenen Pflastermix (12) eine Schicht Glasasche (10) vorgesehen ist.

Auf diese Weise gelangt man zu einer Bodenfläche der einleitend genannten Art, die die vorerwähnte Aufgabe voll erfüllt. Hinzukommt, daß die Pflastersteine selbst umweltfreundlich und die Folie recyclebar ist, so daß bei der Änderung einer derartigen Pflasterung bzw. bei deren Entfernung bzw. Beseitigung keine besonderen Entsorgungsschwierigkeiten bestehen. Außerdem ist durch die Anordnung von Glasasche, die vergleichbar mit Kies ist, der gebrochenes Korn ohne Nullanteil hat, sichergestellt, daß die schädliche Flüssigkeit durch die Schicht Glasasche gut gefiltert und schnell nach unten bis zu der Folie geleitet wird, auf der die Flüssigkeit ebenfalls schnell in Gefällerichtung in das Dränagerohr und von dort in den Sammelbehälter gelangt.

Zweckmäßig kann vorgesehen sein, daß in der Schicht Glasasche Heizungsrohre angeordnet sind. Diese Anordnung ist insbesondere für den Gartenbau günstig.

Zweckmäßig beträgt das Gefälle bis zu 3 %, insbesondere etwa 1 %.

Bei Bodenflächen mit großer Ausdehnung ist es zweckmäßig, daß das Erdreich Gefälle nach beiden Seiten hat und an beiden Enden je ein Dränagerohr und ein Sammelbehälter unter- oder überirdisch vorgesehen sind.

Der Sammelbehälter kann oder die Sammelbehälter können mit einer Flüssigkeitshebevorrichtung ausgestattet sein.

In weiterer Ausgestaltung der Erfindung kann die Bodenfläche so ausgebildet sein, daß der Sammelbehälter von unterhalb der Folie bis zur Oberfläche der Pflasterung geführt ist, an der Oberfläche der Pflasterung eine verschließbare Öffnung aufweist und oberhalb der Folie an das Dränagerohr bzw. die Dränagerohre angeschlossen ist.

Zweckmäßig sind den zum Sammelbehälter führenden Dränagerohren in einem Kiesbett bzw. in Kiesbetten angeordnete weitere vom Sammelbehälter wegführende Dränagerohre gegenüberliegend vorgesehen.

Hierbei besteht die Möglichkeit, daß die vom Sammelbehälter ableitenden Dränagerohre das gereinigte Wasser auf einer anderen als der gepflasterten Fläche versickern.

Es besteht auch die Möglichkeit, daß die vom Sammelbehälter ableitenden Dränagerohre das gereinigte Wasser in einem Sickerschacht versickern.

Darüber hinaus können die vom Sammelbehälter ableitenden Dränagerohre das gereinigte Wasser in Kanalrohre ableiten.

Außerdem empfiehlt es sich, die Anordnung so zu treffen, daß jeweils zwischen zwei übereinander liegenden Dränagerohren, von denen das eine im Hinblick auf den Sammelbehälter ein zuleitendes und das andere ein ableitendes Dränagerohr ist, die Folie mit Gefälle nach beiden Seiten zu den Dränagerohren hin von der Mitte zwischen diesen aus angeordnet ist.

In weiterer Ausgestaltung der Erfindung empfiehlt es sich, daß das gereinigte Wasser über die ableitenden Dränagerohre auf einer anderen Fläche unabhängig von der gepflasterten Fläche oder in einem Sickerschacht versickert.

Auch das Ab- bzw. Zuleiten des vor- oder ganzgereinigten ehemals belasteten Wassers in einen Regenwasserabfluß oder einen Schmutzwasserkanal ist je nach Schadstoffbelastung und Reinheitsgrad des den Sammelbehälter verlassenden Wassers möglich.

In zweckmäßiger Ausführung der Erfindung kann vorgesehen sein, daß der Sammelbehälter mit Reinigungsmöglichkeiten biologischer, chemischer oder mechanischer Art zum Reinigen des schadstoffhaltigen Wassers vorgesehen ist.

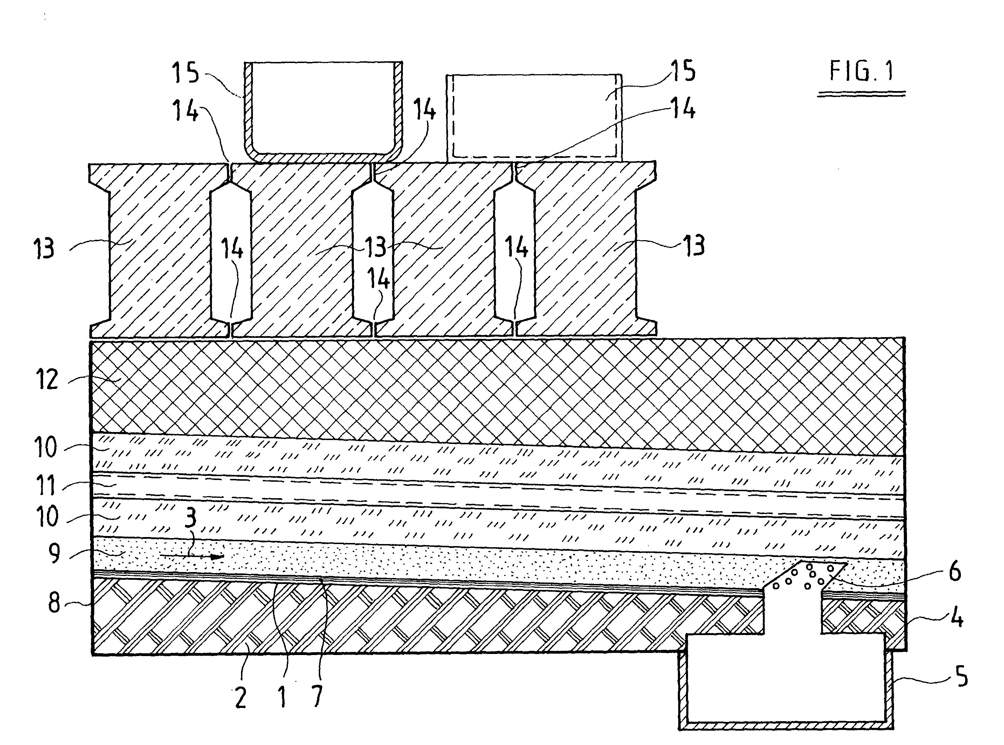

In der Zeichnung Ist ein Ausführungsbeispiel der Erfindung dargestellt. Es zeigt
Fig. 1 einen Querschnitt durch die Bodenfläche,
Fig. 2 eine perspektivische Darstellung der Bodenfläche,
Fig. 3 einen Schnitt längs der Linie III-III der Figur 2 und
Fig. 4 einen Schnitt längs der Linie IV-IV der Figur 2.

Die Oberfläche 1 des Erdreiches 2 weist in Richtung des Pfeiles 3 Gefälle von 1% auf. Am unteren Ende 4 des Erdreiches 2 Ist ein Sammalbehalter 5 für Schadstoffe, insbesondere Flüssigdünger und aus Siloanlagen herrührende Flüssigkeiten vorgesehen. Oberhalb des Sammelbehälters ist ein Dränagerohr 6 quer zur Richtung des Pfeiles 3 angeordnet. Auf der Oberfläche 1 des Erdreiches 2 ist eine PVC-Folie 7 vorgesehen, die sich vom oberen Ende 8 bis zum unteren Ende 4 erstreckt. Die Folie 7 ist eine druckfeste, säurebeständige und verschweißbare PVC-Folie, die recyclebar ist.

Auf der Folie 7 ist eine Schicht 9 aus sehr feinem Sand vorgesehen, oberhalb der eine Schicht Glasasche 10 vorgesehen ist, in der Heizungsrohre 11 angeordnet sind. Auf der Schicht 10 aus Glasasche ist eine Schicht 12 aus Pflastermix vorgesehen, die mit Pflasterstelnen 13 mit zwischen letzteren vorgesehenen Fugen 14 gepflastert ist.

Auf den wasserdurchlässigen Pflastersteinen 13 befinden sich für deren Verwendung In Gärtnereien Blumenkübel 15. Bei Verwendung dieser Pflasterung In Siloanlagen der Landwirtschaft lagert auf den Pflastersteinen 13 die Silage, wobei deren abgeschiedene Flüssigkeit bzw. bei Gärtnereien die Düngungsflüssigkeit durch die Fugen 14 in den Pflastermix 12 gelangen und von dort aus tiefer in die Sandschicht 9, in der sie auf der Folie 7 in Richtung des Pfeiles 3 nach unten fließen, vom Dränagerohr 6 aufgenommen und von dort aus in den Sammelbehälter 5 weitergeleitet werden.

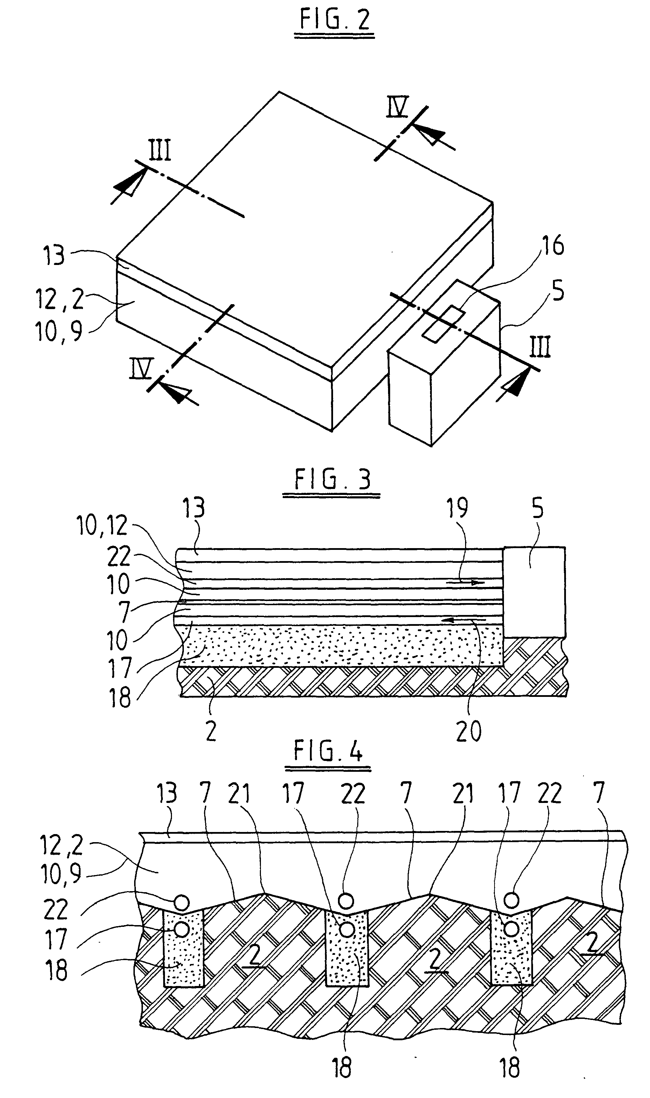

Figur 2 zeigt das Pflasterbett schematisch in perspektivischer Darstellung, wobei zu erkennen ist, daß der Sammelbehälter 5 sich von unterhalb der Folie 7 bis zur Oberfläche der Pflasterung erstreckt und hier einen Deckel 16 aufweist, um den Sammelbehälter 5 inspizieren und das in diesem Sammelbehälter 5 befindliche verschmutzte Wasser herausnehmen oder reinigen kann.

Wie sich aus dem in Figur 3 dargestellten Querschnitt längs der Linie III-III der Figur 2 ergibt, sind die Dränrohre 22 mit Gefälle zum Sammelbehälter 5 hin verlegt, so daß das verschmutzte Wasser in Richtung des Pfeiles 19 in den Behälter 5 gelangt.

Wenn das verschmutzte Wasser im Sammelbehälter 5 gereinigt worden ist, beispielsweise auf biologische, chemische oder mechanische Art, so wird das reine Wasser in Richtung des Pfeiles 20 in ein unterhalb der Folie 7 mit umgekehrter Neigung gelagertes Dränrohr 17 geführt, damit es in einem unterhalb des Dränrohres 17 bzw. der Dränrohre 17 vorhandenes Kiesbett 18 bzw. vorhandenen Kiesbetten 18 versickern kann.

Wie sich insbesondere aus Figur 4 ergibt, ist die Folie 7 so geführt, daß ihr zuoberst liegender Bereich 21 etwa in der Mitte zwischen den Dränrohren 22,17 liegt und von dort her zu den jeweils benachbarten Dränrohren 22,17 Gefälle aufweist.

### Bezugszeichenliste

- 1: Oberfläche
- 2: Erdreich
- 3: Pfeil
- 4: unteres Ende
- 5: Sammelbehälter
- 6: Dränagerohr
- 7: Folie
- 8: oberes Ende
- 9: Sandschicht
- 10: Glasascheschicht
- 11: Heizungsrohre
- 12: Pflastermixschicht
- 13: Pflastersteine
- 14: Fugen
- 15: Blumenkübel
- 16: Deckel
- 17: Dränrohr
- 18: Kiesbett
- 19: Pfeil
- 20: Pfeil
- 21: höchster Bereich
- 22: Dränagerohre

## Patentansprüche

1. Mit Schadstoffen belastete und mit wasserdurchlässigen Pflastersteinen (13) gepflasterte Bodenfläche, wobei auf dem Erdreich (2) ein Pflasterbett aus Sand (9), Pflastermix (12) und dergleichen feinkörnigem Material in im wesentlichen gleicher Stärke aufgebracht ist, auf dem wasserdurchlässige Pflastersteine (13) unter Bildung von Fugen (14) zwischen benachbarten Pflastersteinen (13) in einem bestimmten Muster angeordnet sind, wobei das Erdreich (2) Gefälle aufweist und auf dem Erdreich (2) eine druckfeste und säurebeständige Folie (7) angeordnet ist sowie im tiefsten Bereich der Folie ein Abflußrohr (6) vorgesehen ist, daß in einem im Erdreich angeordneten Sammelbehälter (5) mündet, **dadurch gekennzeichnet, daß** am unteren Ende der Folie quer zur Gefällerichtung ein als Dränagerohr (6) ausgebildetes Abflußrohr vorgesehen ist und zwischen dem auf dem Erdreich (2) angeordneten feinen Sand (9) und dem unmittelbar unter den Pflastersteinen (13) vorgesehenen Pflastermix (12) eine Schicht Glasasche (10) vorgesehen ist.

2. Bodenfläche nach Anspruch 1, **dadurch gekennzeichnet, daß** in der Schicht Glasasche (10) Heizungsrohre (11) angeordnet sind.

3. Bodenfläche nach Anspruch 1 oder 2, **dadurch gekennzeichnet, daß** das Gefälle bis zu 3 %, insbesondere etwa 1% beträgt.

4. Bodenfläche nach einem der vorhergehenden Ansprüche, **dadurch gekennzeichnet, daß** das Erdreich (2) Gefälle nach beiden Seiten hat und an beiden Enden (4,8) je ein Dränagerohr (6) und ein Sammelbehälter (5) unter- oder überirdisch vorgesehen sind.

5. Bodenfläche nach einem der vorhergehenden Ansprüche, **dadurch gekennzeichnet, daß** der Sammelbehälter oder die Sammelbehälter mit einer Flüssigkeitshebevorrichtung ausgestattet ist bzw. sind.

6. Bodenfläche nach einem der vorhergehenden Ansprüche, **dadurch gekennzeichnet, daß** der Sammelbehälter von unterhalb der Folie bis zur Oberfläche der Pflasterung geführt ist, an der Oberfläche der Pflasterung eine verschließbare Öffnung aufweist und oberhalb der Folie an das Dränagerohr bzw. die Dränagerohre angeschlossen ist.

7. Bodenfläche nach einem der vorhergehenden Ansprüche, **dadurch gekennzeichnet, daß** den zum Sammelbehälter führenden Dränagerohren in einem Kiesbett bzw. in Kiesbetten angeordnete weitere vom Sammelbehälter wegführende Dränagerohre gegenüberliegend vorgesehen sind.

8. Bodenfläche nach einem der vorhergehenden Ansprüche, **dadurch gekennzeichnet, daß** die vom Sammelbehälter ableitenden Dränagerohre das gereinigte Wasser auf einer anderen als der gepflasterten Fläche versickern.

9. Bodenfläche nach einem der vorhergehenden Ansprüche, **dadurch gekennzeichnet, daß** die vom Sammelbehälter ableitenden Dränagerohre das gereinigte Wasser in einem Sickerschacht versickern.

10. Bodenfläche nach einem der vorhergehenden Ansprüche, **dadurch gekennzeichnet, daß** die vom Sammelbehälter ableitenden Dränagerohre das gereinigte Wasser in Kanalrohre ableiten.

11. Bodenfläche nach einem der vorhergehenden Ansprüche, **dadurch gekennzeichnet, daß** jeweils zwischen zwei übereinander liegenden Dränagerohren, von denen das eine im Hinblick auf den Sammelbehälter ein zuleitendes und das andere ein ableitendes Dränagerohr ist, die Folie mit Gefälle nach beiden Seiten zu den Dränagerohren hin von der Mitte zwischen diesen aus angeordnet ist.

12. Bodenfläche nach einem der vorhergehenden Ansprüche, **dadurch gekennzeichnet, daß** der Sammelbehälter mit Reinigungsmöglichkeiten biologischer, chemischer oder mechanischer Art zum Reinigen des schadstoffhaltigen Wassers vorgesehen ist.

## Claims

1. Contaminated ground surface paved with permeable paving elements (13), involving the application to the ground (2) of a paving bed comprising sand (9), paving mix (12) and similar fine-grained material in substantially the same thicknesses, on which bed permeable paving elements (13) have been arranged so as to form joints (14) between adjacent paviors (13) in a given pattern, the ground (2) presenting a slope and there being arranged on the ground (2) a compression-proof and acid-resistant foil (7), with a discharge pipe (6) being provided in the lowest region of the foil and opening out into a collecting tank (5) arranged in the ground,
**characterised in that** a discharge pipe in the form of a drainage pipe (6) is provided at the bottom end of the foil, transversely to the direction of the slope, and a layer of glass ash (10) is provided between the fine sand (9) arranged on the ground (2) and the paving mix (12) provided immediately beneath the paviors (13).

2. Ground surface according to claim 1, **characterised in that** heating pipes (11) are arranged in the layer of glass ash (10).

3. Ground surface according to claim 1 or 2, **characterised in that** the slope has a gradient of up to 3%, more particularly approximately 1%.

4. Ground surface according to any of the preceding claims,
**characterised in that** the ground (2) slopes to both sides and provided above or below ground level at the two ends (4, 8) are a drainage pipe (6) and a collecting tank (5), respectively.

5. Ground surface according to any of the preceding claims,
**characterised in that** the collecting tank or tanks is/are equipped with a fluid lifting device.

6. Ground surface according to any of the preceding claims,
**characterised in that** the collecting tank runs from beneath the foil as far as the surface of the paving, incorporates a sealable opening on the surface of the paving, and above the foil is connected to the drainage pipe or pipes.

7. Ground surface according to any of the preceding claims,
**characterised in that** provided opposite the drainage pipes which lead to the collecting tank are further drainage pipes leading away from the collecting tank and arranged in a gravel bed or beds.

8. Ground surface according to any of the preceding claims,
**characterised in that** the drainage pipes running from the collecting tank percolate the cleansed water on a surface other than the paved surface.

9. Ground surface according to any of the preceding claims,
**characterised in that** the drainage pipes running from the collecting tank percolate the cleansed water in a soakaway.

10. Ground surface according to any of the preceding claims,
**characterised in that** the drainage pipes running from the collecting tank discharge the cleansed water into sewer pipes.

11. Ground surface according to any of the preceding claims,
**characterised in that** in each case between two drainage pipes situated one above the other, one of which is an incoming drainage pipe in relation to the collecting tank and the other an outgoing drainage pipe, the foil sloping in both directions towards the drainage pipes is arranged centrally therebetween.

12. Ground surface according to any of the preceding claims,
**characterised in that** the collecting tank is provided with cleansing facilities of a biological, chemical or mechanical nature for cleansing the contaminated water.

## Revendications

1. Surface de sol soumise à des substances polluantes et pavée avec des pavés (13) perméables à l'eau, une sous-couche pour pavés constituée, sur une épaisseur sensiblement identique, de sable (9), de mélange pour pavés (12) et de matériau à grain fin analogue, sur laquelle des pavés (13) perméables à l'eau sont disposés selon un dessin déterminé en formant des joints (14) entre pavés voisins (13), étant épandue sur le sol (2), le sol (2) présentant une pente, une feuille (7) à l'épreuve de la pression et des acides étant disposée sur le sol (2) et un tuyau de décharge (6) qui débouche dans un récipient collecteur (5) disposé dans le sol étant prévu dans la zone la plus profonde de la feuille, **caractérisée en ce qu'**il est prévu un tuyau de décharge réalisé sous forme de drain (6) à l'extrémité inférieure de la feuille transversalement à la direction de la pente ainsi qu'une couche de cendres vitrifiées (10) entre la couche de sable fin (9) disposée sur le sol (2) et le mélange pour pavés (12) prévu directement au-dessous des pavés (13).

2. Surface de sol selon la revendication 1,
**caractérisée en ce que** des tuyaux de chauffage (11) sont disposés dans la couche de cendres vitrifiées (10).

3. Surface de sol selon la revendication 1 ou 2, **caractérisée en ce que** la valeur de la pente peut atteindre 3 % et est notamment d'environ 1 %.

4. Surface de sol selon l'une des revendications précédentes, **caractérisée en ce que** le sol (2) présente une pente des deux côtés et **en ce qu'**un drain (6) et un récipient collecteur (5) sont prévus, sous ou sur le sol, à chacune des extrémités (4, 8).

5. Surface de sol selon l'une des revendications précédentes, **caractérisée en ce que** le ou les récipients collecteurs sont équipés d'un dispositif de relevage de liquide.

6. Surface de sol selon l'une des revendications précédentes, **caractérisée en ce que** le récipient collecteur s'étend depuis au-dessous de la feuille jusqu'à la surface du pavage, présente, à la surface au pavage, une ouverture pouvant être obturée et est raccordé, au-dessus de la feuille, au(x) drain(s).

7. Surface de sol selon l'une des revendications précédentes, **caractérisée en ce qu'**il est prévu, en face des drains menant au récipient collecteur, des drains supplémentaires partant du récipient collecteur et disposés dans une ou plusieurs sous-couches de gravier.

8. Surface de sol selon l'une des revendications précédentes, **caractérisée en ce que** les drains issus du récipient collecteur laissent l'eau purifiée s'infiltrer dans une autre surface que celle pavée.

9. Surface de sol selon l'une des revendications précédentes, **caractérisée en ce que** les drains issus du récipient collecteur laissent l'eau purifiée s'infiltrer dans un puits drainant.

10. Surface de sol selon l'une des revendications précédentes, **caractérisée en ce que** les drains issus du récipient collecteur évacuent l'eau purifiée dans des tuyaux d'égout.

11. Surface de sol selon l'une des revendications précédentes, **caractérisée en ce que**, chaque fois que deux drains, dont l'un est un drain d'amenée et l'autre un drain d'évacuation en considération du récipient collecteur, sont placés l'un au-dessus de l'autre, la feuille est disposée en pente des deux côtés en direction des drains à partir du point central situé entre ceux-ci.

12. Surface de sol selon l'une des revendications précédentes, **caractérisée en ce que** le récipient collecteur est muni de moyens de nettoyage de type biologique, chimique ou mécanique destinés à purifier l'eau contenant des substances polluantes.
